Europäisches Patentamt

European Patent Office

Office européen des brevets

(19)

(11) Veröffentlichungsnummer: **0 161 631**
A2

# (12) EUROPÄISCHE PATENTANMELDUNG

(21) Anmeldenummer: 85105670.5

(22) Anmeldetag: 09.05.85

(51) Int. Cl.⁴: **A 01 F 12/42**

(30) Priorität: 15.05.84 US 610536

(43) Veröffentlichungstag der Anmeldung: 21.11.85
Patentblatt 85/47

(84) Benannte Vertragsstaaten: **DE FR GB IT**

(71) Anmelder: **DEERE & COMPANY, 1 John Deere Road,
Moline Illinois 61265 (US)**

(72) Erfinder: **Yarbrough, Don Lewis, 215 West 13 Avenue,
Coal Valley Illinois 61240 (US)**

(74) Vertreter: **Sartorius, Peter et al, DEERE & COMPANY
European Office, Patent Department
Postfach 503 Steubenstrasse 36-42,
D-6800 Mannheim 1 (DE)**

(54) **Entgrannerplatteneinrichtung.**

(57) Ein Dreschkorb eines Mähdreschers weist im vorderen Bereich mittels Schraubenbolzen (46) sicherbare Entgrannerplatten (40) auf. Hierzu lassen sich auf den Schaft des Schraubenbolzens (46) verformbare Buchsen (50') aufschieben, die durch Drehen von auf den Schraubenbolzen (46) aufschraubbaren Muttern (76) verformt werden, bis sie sich gegen jeweils zwei nebeneinanderliegende Dreschstangen (34) anlegen und dadurch die Entgrannerplatten (40) sichern.

EP 0 161 631 A2

## Entgrannerplatteneinrichtung

Die Erfindung bezieht sich auf eine Entgrannerplatteneinrichtung für den Dreschkorb eines Mähdreschers, der aus zahlreichen untereinander einen Abstand aufweisenden Dreschleisten gebildet ist, die parallel zur Drehachse der Dreschtrommel verlaufen, die über sich in Umfangsrichtung erstreckende, parallel zueinander verlaufende Dreschstangen miteinander verbunden sind, wobei die zwischen den Dreschleisten gebildeten Zwischenräume mittels über Schraubenbolzen gesicherter Entgrannerplatten ausgefüllt werden können.

Es ist bereits eine Entgrannerplatteneinrichtung für einen Mähdrescher bekannt (US-A-2 159 664), die aus zahlreichen parallel zueinander verlaufenden Platten besteht, die zwischen den Dreschleisten einsetzbar und mittels Schraubenbolzen und gegen die Dreschleisten anlegbarer Halterungen sicherbar sind. Eine derartige Befestigung hat jedoch den Nachteil, daß bei starken Erschütterungen die Schraubenbolzen sich lösen und dadurch die Entgrannerplatten nicht ihre gewünschte Lage beibehalten und gegebenenfalls sich in die Bewegungsbahn der Dreschtrommel bewegen können.

Demgegenüber liegt der Erfindung die Aufgabe zugrunde, mit einfachen baulichen Mitteln eine Sicherung für auswechselbare Entgrannerplatten zu schaffen, wobei die Sicherung der Entgrannerplatten auch bei extremen Erschütterungen sich nicht löst. Diese Aufgabe ist dadurch gelöst worden, daß auf einen jeden Schraubenbolzen verformbare Befestigungselemente aufbringbar sind, die derart gegen die Dreschstangen oder die Dreschleisten oder gegen die Dreschstangen und gleichzeitig gegen die Dreschleisten preßbar sind, daß die Entgrannerplatten zwischen den Dreschleisten und den Dreschstangen gehalten werden. Durch die Verwendung eines verformbaren Befestigungselementes, das zwischen den Schraubenbolzen und der Mutter sowie den Dreschstangen oder den Dreschleisten wirkt, wird eine einwandfreie Fixierung der Entgrannerplatten gewährleistet, ohne daß auch bei extremen Erschütterungen sich die Schraubenbolzen lösen, da das verformbare Befestigungselement stets einen entsprechenden Anpreßdruck auf den Schraubenbolzen ausübt und somit eine selbsttätige Verstellung des Schraubenbolzens unterbindet. Außerdem erhält man hierdurch eine relativ einfache Verbindung zwischen der Entgrannerplatte und der Dreschstange bzw. der Dreschleiste, da sich der verformbare Teil beim Anziehen des Schraubenbolzens gegen die Dreschstangen bzw. die Dreschleisten anlegt bzw. diese untergreift und damit die einzelnen Entgrannerplatten an den Dreschstangen bzw. Dreschleisten festklemmt. Selbst bei geringfügigem Verstellen des Schraubenbolzens reicht die dem verformbaren Befestigungselement innewohnende Federkraft aus, einen gleichmäßigen Anpreßdruck auf den Schraubenbolzen bzw. die Entgrannerplatten auszuüben, so daß eine ratterfreie Verbindung für die Entgrannerplatten geschaffen wird. Hierzu ist es vorteilhaft, daß die Entgrannerplatte zur Aufnahme von Schraubenbolzen Bohrungen aufweist und gegen die Oberseite der parallel zueinander verlaufenden Dreschstangen mittels des Schraubenbolzens gedrückt wird, wobei der Schraubenbolzen mit seinem zugehörigen Schraubenkopf gegen die Oberfläche der Entgrannerplatte und die auf den Gewindeteil des Schraubenbolzens aufschraubbare Mutter gegen die Unterseite des auf den Schraubenbolzen axial aufgeschobenen, verformbaren Befestigungselementes anliegt, das als zylinderförmige Buchse ausgebildet ist, und daß die aus einem elastischen Material, beispielsweise aus Gummi, herstellbare Buchse mit ihrer Oberfläche gegen die gegenüberliegende äußere Oberfläche der Entgrannerplatte anliegt, während der Schraubenkopf des Schraubenbolzens gegen die innere Oberfläche der Entgrannerplatte anliegt. Durch die Verwendung einer zylindrischen verformbaren Buchse, die beispielsweise aus Plastik oder aus Gummi hergestellt werden kann, wird ein einfach herzustellendes Befestigungselement geschaffen, mit dem eine einwandfreie Feststellung der Entgrannerplatte am Dreschkorb gewährleistet wird.

In weiterer Ausgestaltung der Erfindung ist es vorteilhaft, daß die koaxial auf dem Schraubenbolzen angeordnete Buchse mit ihrer Zylinderwand nach außen ausgebeult werden kann und der ausgebeulte Teil gegen eine Seite, insbesondere gegen die untere Seite, der Dreschstangen preßbar ist und dadurch die Lage der Entgrannerplatte fixiert und daß die auf den Schraubenbolzen aufschraubbare Mutter in eine am unteren Ende der Buchse vorgesehene Sacklochbohrung einsetzbar und fixierbar ist. Durch die Verwendung einer Sacklochbohrung am unteren Ende der Buchse läßt sich auf einfache Weise die Sacklochbohrung so einer Sechskantmutter anpassen, daß diese sich nicht in der Buchse drehen kann. Auf diese Weise kann der Schraubenbolzen zur Verformung der Buchse ohne weiteres gedreht werden, ohne daß dadurch zusätzlich die Mutter mit einem zweiten Schraubenschlüssel gehalten werden muß.

Vorteilhaft ist es außerdem, daß die verformbare Buchse im entlasteten Zustand einen Durchmesser aufweist, der kleiner ist als der Abstand zwischen den Längsseiten der Entgrannerplatten, und daß auf dem Schraubenbolzen eine Mutter mit einer Unterlegscheibe angeordnet ist, die gegen die Stirnseite der Buchse anliegt. Da die verformbare Buchse im entlasteten Zustand einen kleineren Durchmesser aufweist als der Abstand zwischen zwei nebeneinander liegenden Entgrannerplatten, läßt sich die Buchse ohne weiteres mit der Entgrannerplatte zwischen die nebeneinander liegenden Dreschleisten einsetzen. Erst durch Anziehen des Schraubenbolzens verformt sich die Buchse so weit, bis sie gegen die Unterseiten der Dreschstangen anliegt und dadurch die Entgrannerplatten auf den Dreschstangen festsetzt. Dabei ist es auch möglich, daß ein Teil des verformbaren Teils der Buchse sich gegen die gegenüberliegenden Seitenwände der Dreschleisten anlegt und dadurch eine zusätzliche Fixierung für die Entgrannerplatten schafft. Durch Anlage der Unterlegscheibe gegen die untere Stirnseite der Buchse wird eine einwandfreie Verformung der Buchse gewährleistet, ohne daß diese an irgendeiner Stelle beschädigt wird.

In weiterer Ausgestaltung der Erfindung ist es vorteilhaft, daß der Durchmesser des verformten Teiles der Buchse in etwa gleich groß oder größer ist als der Abstand zwischen den außen liegenden, parallel verlaufenden Längsseiten von zwei nebeneinander liegenden Dreschstangen und daß die Buchse als Druckfeder ausgebildet ist. Da die Buchse in ihrem verformten Zustand einen wesentlich größeren Durchmesser aufweist als der Abstand zwischen den parallel verlaufenden äußeren Längsseiten von zwei nebeneinander liegenden Dreschstangen, wird ein einwandfreier Sitz der Buchse in ihrem verformten Zustand gewährleistet und dabei verhindert, daß die Buchse zwischen den einzelnen Dreschstangen herausrutschen kann. Anstelle der aus Gummi ausgebildeten Buchse ist es auch möglich, eine Druckfeder, beispielsweise eine Spiralfeder, zu verwenden, die gegen die Unterseite der Dreschstangen gepreßt wird und dadurch eine Fixierung der Entgrannerplatten gewährleistet.

Im folgenden wird die Erfindung anhand von lediglich einen Ausführungsweg darstellenden Zeichnungen näher erläutert. Es zeigt:

Fig. 1    eine schematische Darstellung einer Dreschvorrichtung mit einem Dreschkorb, dessen Entgrannerplatten mittels federbelasteter Schrauben befestigt sind,

Fig. 2    einen Schnitt entlang der Linie 2 - 2 gemäß Fig. 1,

Fig. 3 und 4    Schnittdarstellungen der Schraubenbolzen mit den zugehörigen Federelementen.

In der Zeichnung ist mit 10 ein Förderband eines in der Zeichnung nur teilweise dargestellten Schrägfördergehäuses bezeichnet, über das das Erntegut dem Aufnahmebereich 12 und dann dem Einlaßspalt 14 zwischen einer Dreschtrommel 16 und einem Dreschkorb 18 zugeführt wird. Beim Dreschvorgang mittels der Dreschtrommel 16 und des Dreschkorbes 18 wird die Hauptmenge des ausgedroschenen Erntegutes radial durch den Dreschkorb 18 geführt, während das Stroh und noch teilweise nicht ausgedroschenes Erntegut mittels der Strohleittrommel 20 dem Hordenschüttler 22 zugeführt wird. Das ausgedroschene Erntegut und etwas Kaff, das durch den Dreschkorb 18 geführt wird, trifft auf geneigt verlaufende Förderschnekken 24, die das Erntegut einer in der Zeichnung nicht dargestellten Reinigungsvorrichtung zuführen.

Der Dreschkorb 18 besteht aus zahlreichen parallel zueinander verlaufenden Dreschleisten 30, die von Seitenrahmen 32 aufgenommen werden. Zahlreiche parallel zueinander verlaufende, konkav ausgebildete Dreschstangen erstrecken sich durch in den Dreschleisten vorgesehene Bohrungen und sind in diesen entsprechend gesichert. Zwischen den parallel zueinander verlaufenden Dreschleisten 30 bzw. etwas unterhalb der oberen Kante 36 der Dreschleisten 30 ist eine Aussparung 38 gebildet, deren Boden durch die Dreschstangen 34 geformt ist.

Je nach den Arbeitsbedingungen können im vorderen Bereich des Dreschkorbes 18 in diesen Aussparungen 38 Entgrannerplatten vorgesehen werden, die rechteckförmig ausgebildet sind und mit Abstand zueinander angeordnete Bohrungen 42 aufweisen. Eine jede Bohrung 42 der Entgrannerplatte 40 dient zur Aufnahme einer Befestigungseinrichtung 44, die als Schraubenbolzen 46 ausgerüstet sein kann, auf dem eine federelastische Buchse 48 angeordnet ist. Die federelastische Buchse 48 kann beispielsweise aus Gummi 50 oder aus einem anderen elastischen Material hergestellt sein. Die zylinderförmige Buchse 48 weist eine relativ dicke Wand 52 mit einer Axialbohrung 54 auf. Der äußere Durchmesser der Buchse 48 ist etwas größer als der Abstand bzw. die Zwischenräume zwischen den einzelnen Entgrannerplatten 40. Das Ende der Buchse 48 ist mit einer Ausdrehung versehen, die zur Aufnahme einer auf den Schraubenbolzen 46 koaxial aufschraubbaren Mutter 56 dient. Die Mutter 56 kann in die Buchse 48 entsprechend eingepaßt sein. Die innen liegende Seite 58 der Mutter 56 liegt gegen die innen liegende Oberfläche bzw. den Boden der Eindrehung an. Der Schraubenbolzen 46 besteht aus einem Sechskantkopf 66 und dem Schraubenbolzenteil 62. Die Schulter 68 des Sechskantkopfes 66 liegt gegen die Oberfläche 70 der Entgrannerplatte 40 an.

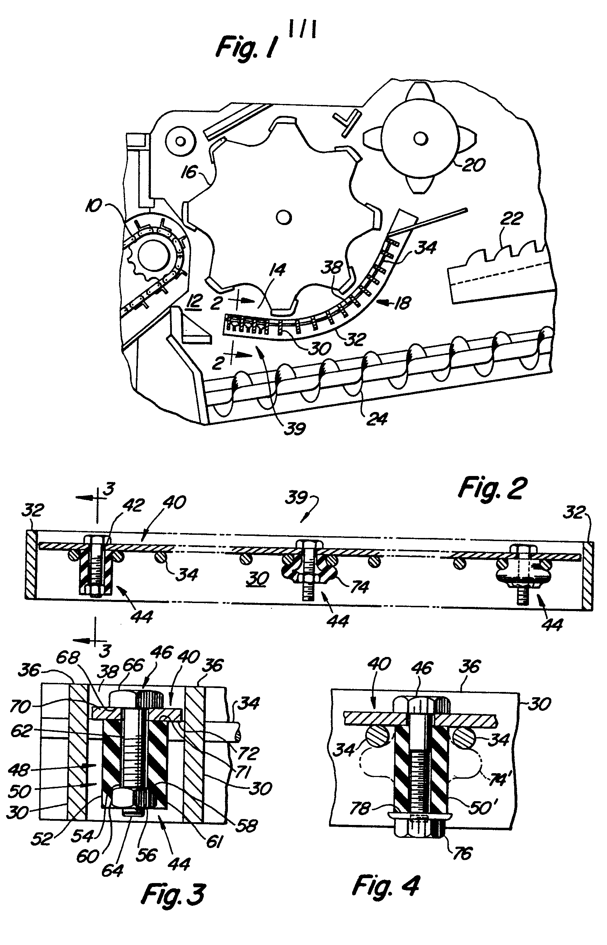

Bevor die Entgrannerplatte 40 montiert wird, wird zuerst der Schraubenbolzen 46 mit der zugehörigen Buchse 48 und der Mutter 56 an der Entgrannerplatte befestigt (siehe Fig. 2, linke Abbildung). Nachdem die Entgrannerplatte 40 zwischen die nebeneinander liegenden Dreschleisten 30 des Dreschkorbes 18 eingesetzt ist, kann mittels der Mutter 56 das innen liegende Ende 71 gegen die äußere Oberfläche 72 der Entgrannerplatte 40 gepreßt werden, so daß hierdurch eine ausreichende Reibwirkung zwischen der Oberfläche der Entgrannerplatte 40 und der Oberfläche der Buchse 48 entsteht, so daß der Sechskantkopf 66 auf einfache Weise auf den Gewindeteil 64 des Schraubenbolzens 46 aufgeschraubt werden kann, ohne daß dabei die Lage der Buchse 48 sich entsprechend verändert. Nachdem die Buchse 48 auf den Schraubenbolzen 46 aufgebracht und entsprechend befestigt ist, wird die Entgrannerplatteneinrichtung 39 in den Zwischenraum bzw. die Aussparung 38 zwischen den beiden gegenüberliegenden Dreschleisten 30 des Dreschkorbes 18 eingesetzt. Dabei erstreckt sich die Befestigungseinrichtung 44 radial nach außen zwischen den Dreschstangen 34, wobei die äußere Oberfläche 72 der Buchse 48 einen Platz zwischen den Dreschstangen 34 einnimmt. Durch weiteres Anziehen der Mutter 56 wird die Buchse 48 gemäß Fig. 2, mittlere Abbildung, entsprechend zusammengedrückt und dadurch verformt, so daß die Zylinderwand 52 nach außen ausstülpt und eine Form 74 einnimmt. Dabei legt sich die Zylinderwand 52 gegen die Dreschstangen 34 an und klemmt somit in dieser Stellung die Entgrannerplatte 40 zwischen den Dreschleisten 30 fest.

Die einfache und vorteilhafte Ausbildung der Entgrannerplatteneinrichtung 39 führt zu einer erheblichen Kostenverminderung gegenüber herkömmlichen Entgrannereinrichtungen.
Hierzu ist es besonders vorteilhaft, zwei oder drei Befestigungseinrichtungen für die Entgrannerplatteneinrichtung
39 vorzusehen. Die Zahl der Befestigungseinrichtungen hängt
auch von der Größe des Mähdreschers ab. So ist es beispielsweise möglich, Entgrannereinrichtungen mit zwei bis drei
Befestigungseinrichtungen am Dreschkorb 18 zu sichern, die
hierzu über die gesamte Breite des Dreschkorbes sich erstrecken. Hierzu wird die Entgrannereinrichtung mit der zugehörigen Buchse, die noch nicht übermäßig gestaucht ist,
zwischen zwei nebeneinander liegenden Dreschstangen 34 vorgesehen. Wenn die Entgrannereinrichtungen entsprechend in
ihre Lage gebracht worden sind, so brauchen lediglich noch
die zugehörigen Schraubenbolzen 46 mittels eines herkömmlichen Schlüssels so weit gedreht zu werden, bis mittels
der Buchsen die entsprechende Klemmwirkung erzielt worden
ist. Die aus Gummi hergestellte Buchse 48 wirkt auf den
entsprechenden Schraubenbolzen 46 und zieht diesen gegen
die Oberfläche 70 der Entgrannerplatte, so daß die Entgrannerplatteneinrichtung  39  ihre Lage beibehält, auch wenn
diese gewissen Schwingungen ausgesetzt ist. Durch die Verwendung der aus Gummi oder aus einem anderen elastischen
Material hergestellten Buchse wird ein selbständiges Lösen
des Schraubenbolzens 46 verhindert.

Die in Fig. 1 bis 4 dargestellte Entgrannerplatte, die aus
einem flachen Band besteht, kann auch anders ausgebildet
sein. Ebenso ist es möglich, diese aus einem Profilträger
herzustellen. Ferner kann die Dicke der Entgrannerplatte
40 variiert werden. Ebenso ist es auch möglich, den Schraubenbolzen mit einer zugehörigen Mutter 76 auszustatten, die
mit einer an dieser angeordneten Unterlegscheibe 78 ausgerüstet ist, die gegen die Stirnfläche des unteren Endes der
Buchse 50' wirkt und diese in eine Form 74' verstellt, wenn
die Mutter 76 entsprechend angezogen wird (siehe Fig. 4).

## Patentansprüche

1. Entgrannerplatteneinrichtung für den Dreschkorb eines Mähdreschers, der aus zahlreichen untereinander einen Abstand aufweisenden Dreschleisten (30) gebildet ist, die parallel zur Drehachse der Dreschtrommel (16) verlaufen, die über sich in Umfangsrichtung erstreckende, parallel zueinander verlaufende Dreschstangen (34) miteinander verbunden sind, wobei die zwischen den Dreschleisten (30) gebildeten Zwischenräume mittels über Schraubenbolzen (46) gesicherter Entgrannerplatten (40) ausgefüllt werden können, dadurch gekennzeichnet, daß auf einen jeden Schraubenbolzen (46) verformbare Befestigungselemente (Buchse 48) aufbringbar sind, die derart gegen die Dreschstangen (34) oder die Dreschleisten oder gegen die Dreschstangen und gleichzeitig gegen die Dreschleisten preßbar sind, daß die Entgrannerplatten (40) zwischen den Dreschleisten und den Dreschstangen gehalten werden.

2. Vorrichtung nach Anspruch 1, dadurch gekennzeichnet, daß die Entgrannerplatte (40) zur Aufnahme von Schraubenbolzen (46) Bohrungen aufweist und gegen die Oberseite der parallel zueinander verlaufenden Dreschstangen (34) mittels des Schraubenbolzens (46) gedrückt wird, wobei der Schraubenbolzen (46) mit seinem zugehörigen Schraubenkopf gegen die Oberfläche (70) der Entgrannerplatte (40) und die auf den Gewindeteil (64) des Schraubenbolzens (46) aufschraubbare Mutter (56) gegen die Unterseite des auf den Schraubenbolzen axial aufgeschobenen, verformbaren Befestigungselementes anliegt, das als zylinderförmige Buchse ausgebildet ist.

3. Vorrichtung nach Anspruch 1 oder 2, dadurch gekennzeichnet, daß die aus einem elastischen Material, beispielsweise aus Gummi, herstellbare Buchse (48) mit ihrer Oberfläche (72) gegen die gegenüberliegende äußere Oberfläche der Entgrannerplatte (40) anliegt, während der Schraubenkopf des Schraubenbolzens (46) gegen die innere Oberfläche der Entgrannerplatte (40) anliegt.

4. Vorrichtung nach einem oder mehreren der vorherigen Ansprüche, dadurch gekennzeichnet, daß die koaxial auf dem Schraubenbolzen (46) angeordnete Buchse (48) mit ihrer Zylinderwand (52) nach außen ausgebeult werden kann und der ausgebeulte Teil gegen eine Seite, insbesondere gegen die untere Seite, der Dreschstangen (34) preßbar ist und dadurch die Lage der Entgrannerplatte (40) fixiert.

5. Vorrichtung nach einem oder mehreren der vorherigen Ansprüche, dadurch gekennzeichnet, daß die auf den Schraubenbolzen (46) aufschraubbare Mutter (56) in eine am unteren Ende der Buchse (48) vorgesehene Sacklochbohrung einsetzbar und fixierbar ist.

6. Vorrichtung nach einem oder mehreren der vorherigen Ansprüche, dadurch gekennzeichnet, daß die verformbare Buchse (48) im entlasteten Zustand einen Durchmesser aufweist, der kleiner ist als der Abstand zwischen den Längsseiten der Entgrannerplatten (40).

7. Vorrichtung nach einem oder mehreren der vorherigen Ansprüche, dadurch gekennzeichnet, daß auf dem Schraubenbolzen (46) eine Mutter (76) mit einer Unterlegscheibe angeordnet ist, die gegen die Stirnseite der Buchse (48) anliegt.

8. Vorrichtung nach einem oder mehreren der vorherigen Ansprüche, dadurch gekennzeichnet, daß der Durchmesser des verformten Teiles der Buchse (48) in etwa gleich groß oder größer ist als der Abstand zwischen den
außen liegenden, parallel verlaufenden Längsseiten
von zwei nebeneinander liegenden Dreschstangen (34).

9. Vorrichtung nach einem oder mehreren der vorherigen
Ansprüche, dadurch gekennzeichnet, daß die Buchse
(48) als Druckfeder ausgebildet ist.

Fig. 1 ¹/¹

Fig. 2

Fig. 3

Fig. 4